# EUROPÄISCHE PATENTSCHRIFT

(11) **EP 2 511 570 B1**
(45) Veröffentlichungstag und Bekanntmachung des Hinweises auf die Patenterteilung: **04.06.2014**
(21) Anmeldenummer: 12160110.8
(22) Anmeldetag: 19.03.2012
(51) Int. Cl.: B60K 1/00, F16H 3/54, F16H 48/10

(54) **Antriebsvorrichtung mit wenigstens einer elektrischen Maschine und mit einer mittels Druckmittel betätigten Kupplung**
Drive device with at least one electric machine and coupling actuated using compressed material
Dispositif d'entraînement doté d'au moins une machine électrique et d'un couplage actionné par un moyen de pression

(30) Priorität: 13.04.2011 DE 102011007270
(43) Veröffentlichungstag der Anmeldung: 17.10.2012
(73) Patentinhaber: Schaeffler Technologies GmbH & Co. KG, 91074 Herzogenaurach (DE)
(72) Erfinder: Smetana, Tomas, 91074 Herzogenaurach (DE)

(56) Entgegenhaltungen:
- CN-U- 201 672 012
- JP-A- 2002 104 001
- US-A- 4 479 404

## Beschreibung

### Gebiet der Erfindung

Die Erfindung betrifft eine Antriebsvorrichtung mit wenigstens einer elektrischen Maschine, mit mindestens einem Planetentrieb, mit einem Differenzial und mit einer um eine Rotationsachse Drehmomente übertragenden Wirkverbindung zwischen einer Antriebswelle der elektrischen Maschine und dem Planetentrieb und einer weiteren Drehmomente übertragenden Wirkverbindung zwischen dem Planetentrieb und dem Differenzial, wobei die Antriebsvorrichtung wenigstens eine mit dem Planetentrieb wirkverbundene Kupplung mit einer durch Druckmittel beaufschlagbaren Betätigungseinrichtung für die Kupplung aufweist, wobei die Betätigungseinrichtung wenigstens einen in einer Druckkammer verschiebbaren Kolben aufweist.

### Hintergrund der Erfindung

US 4,479,404A1 zeigt eine solche Antriebsvorrichtung, die aus einer elektrischen Maschine, aus einem Zweigang-Planetengetriebe und aus einem Differenzial gebildet ist. Die elektrische Maschine und das Zweigang-Planetengetriebe sind koaxial zueinander angeordnet und miteinander wirkverbunden. Die elektrische Maschine ist über das Zweigang-Planetengetriebe mit dem Differenzial wirkverbunden.

Das Zweigang-Planetengetriebe besteht aus zwei Planetentrieben. Ein Sonnenrad des ersten Planetentriebes ist durch die Antriebswelle der elektrischen Maschine antreibbar. Weiter weist der erste Planetentrieb einen Planetenträger auf, an dem ein Satz Planetenräder rotierbar gelagert ist. Die Planetenräder stehen im Zahneingriff mit dem Sonnenrad und einem Hohlrad. Der Planetenträger des ersten Planetentriebs ist rotationsfest mit einem weiteren Sonnenrad verbunden und mit diesem gemeinsam um die Rotationsachse rotierbar.

Der zweite Planetentrieb umfasst außer dem Sonnenrad einen Satz Planetenräder, ein Hohlrad und einen Planetenträger. Das Hohlrad des zweiten Planetentriebs ist gegenüber einem der Gehäuseabschnitte der Antriebsvorrichtung rotationsfest befestigt.

Zwischen dem Hohlrad des ersten Planetentriebs und einem der Gehäuseabschnitte ist eine Freilaufkupplung angeordnet. Außerdem steht das Hohlrad des ersten Planetentriebs in einer Wirkverbindung mit einer Scheibenbremse, so dass dieses durch die Bremse rotationsfest am Gehäuseabschnitt gehalten werden kann. Weiterhin steht das Hohlrad über eine Kupplung in einer Wirkverbindung mit dem zweiten Planetentrieb. Über die Kupplung kann eine um die Rotationsachse Drehmomente übertragende Verbindung zwischen dem Hohlrad des ersten Planetentriebs und dem Planetenträger des zweiten Planetentriebs hergestellt werden.

Die Kupplung ist eine Lamellenkupplung und wird durch einen ringförmigen Kolben betätigt. Der Kolben ist konzentrisch zur Rotationsachse angeordnet in einer Druckkammer aufgenommen, welche teilweise in dem Planetenträger des zweiten Planetentriebs ausgebildet ist. Das Druckmedium ist eine hydraulische Flüssigkeit. Die Druckkammer ist über einen Kanal, der durch den Differenzialkorb des Differenzials und dann durch den Planetenträger des zweiten Planetentriebs führt, mit einer nicht näher beschriebenen Gebereinrichtung verbunden.

Der Planetenträger des zweiten Planetentriebs ist mit dem Differenzialkorb des Kegelraddifferenzials rotationsfest gekoppelt - beide sind zusammen um die Rotationsachse rotierbar. Im Bereich des Kanals muss die Trennstelle zwischen Planetenträger und Differenzialkorbs zumindest so dicht sein, dass in der Druckkammer beim Einkuppeln ausreichend Druck zum Verschieben des Kolbens anliegt.

Die Rotationsachse ist Hauptachse der Antriebsvorrichtung, zugleich Rotationsachse der Antriebswelle der elektrischen Maschine und auch zugleich zentrale Rotationsachse des jeweiligen Planetentriebs. Die elektrische Maschine, die Planetentriebe und das Kegelraddifferenzial sind bezüglich der Rotationsachsen koaxial zueinander angeordnet, wobei die Rotationsachse des Kegelraddifferenzials mit den Zentralachsen der Achswellenräder und damit mit der Rotationsachse des Differenzialkorbs übereinstimmt.

Das Differenzial ist ein klassisches Kegelraddifferenzial, über das Drehmomente von einem Differenzialkorb über Ausgleichskegelräder an Achswellenkegelräder einer linken und einer rechten Achswelle verteilt werden. Die Achswellen sind mit angetriebenen Rädern eines Fahrzeugs verbunden, können aber auch, wenn das Differenzial in einem Verteilergetriebe eingesetzt ist, zu angetriebenen Achsen führen. Eine der Achswellen steckt konzentrisch in der als Hohlwelle ausgebildeten Antriebswelle (Rotorwelle).

Die Rotorwelle der elektrischen Maschine ist an einer Seite in einem Lagerschild mittels eines Kugellagers gelagert. Der Außenring des Kugellagers sitzt in einem Lagerschild eines Gehäuses der elektrischen Maschine. Eine zweites Lager zur Lagerung der Rotorwelle sitzt in einer Zwischenwand eines Gehäuses des Getriebes, die das Lagerschild für die elektrische Maschine bildet und die das Planetengetriebe und die elektrische Maschine räumlich voneinander trennt. Das Gehäuse der Antriebsvorrichtung ist dreiteilig durch einen Gehäuseabschnitt für das Differenzial, einen Gehäuseabschnitt für das Planetengetriebe und durch einen Gehäuseabschnitt für die elektrische Maschine gebildet. Die Gehäuseabschnitte sind axial miteinander verschraubt.

### Beschreibung der Erfindung

Die Aufgabe der Erfindung besteht darin, eine einfach montierbare und kompakte Antriebsvorrichtung zu schaffen.

Die Aufgabe ist durch den Gegenstand des Anspruchs 1 gelöst.

Erfindungsgemäß weist eine Zwischenwand eines Gehäuses der Antriebsvorrichtung die Druckkammer auf, wobei die Zwischenwand längs zwischen der elektrischen Maschine und der Kupplung angeordnet ist. Die Zwischenwand ist vorzugsweise ein Lagerschild der elektrischen Maschine, wobei die mit dem Rotor verbundene Antriebswelle der elektrischen Maschine oder der Rotor selbst relativ zum Stator um die Rotationsachse drehbar in der Zwischenwand gelagert ist.

Die Druckkammer ist in einem Zylinder ausgebildet, der in die Zwischenwand/das Lagerschild eingesetzt oder direkt in dem Lagerschild ausgebildet ist. Letzteres schließt ein, dass die Begrenzungsflächen der Druckkammer inklusive der vorzugsweise innenzylindrischen Gleitflächen für den Kolben zumindest teilweise aus dem Material der Zwischenwand/des Lagerschilds sind.

Druckmittel sind Luft oder vorzugsweise hydraulische Flüssigkeiten.

Die Betätigungseinrichtung weist wenigstens einen oder mehrere Druckkolben auf, die oder der mit Druck beaufschlagt längs verschiebbar sind. Der/die Kolben sind entweder mit radialem Abstand zur Rotationsachse angeordnet oder vorzugsweise als Ringkolben ausgebildet und dabei konzentrisch zur Rotationsachse der Antriebswelle angeordnet. Der/die Kolben wirken zum Ein- bzw. Ausrücken auf Betätigungselemente wie Hebel, Druckplatten-, stifte oder auf Federn oder geben diese frei. Die Kolben schieben oder ziehen beim Einrücken oder Ausrücken der Kupplung.

Insbesondere der oder die Ringkolben sind bevorzugt längs der Rotationsachse relativ zur Antriebswelle beweglich. Zwischen dem Kolben und dem Betätigungselement kann wahlweise ein Kupplungsausrücklager angeordnet sein.

Die Erfindung hat den Vorteil, dass die Betätigungseinrichtung auf engsten Bauraum ausgeführt werden kann und die Anzahl der zu montierenden Teile der Betätigungseinrichtung so gering wie möglich gehalten werden kann. Die Kosten für Transport, Lagerung der Teile der Antriebsvorrichtung und deren Montage sind gering, ebenso wie die Montagezeiten.

Die Zwischenwand ist längs zwischen der elektrischen Maschine und der Kupplung angeordnet und ist vorzugsweise ein Umformteil aus Blech oder alternativ ein Gussteil. Letzteres ist bevorzugt wahlweise aus allen denkbaren Leichtmetalllegierungen. In dem Lagerschild der elektrischen Maschine ist die mit dem Rotor verbundene Antriebswelle relativ zum Stator um die Rotationsachse drehbar in der Zwischenwand gelagert.

Eine weitere Ausgestaltung der Erfindung sieht vor, dass die Zwischenwand wenigstens einen für das Druckmittel durchlässigen Kanal aufweist, der eine Gebereinrichtung und die Druckkammer miteinander verbindet. Über die Gebereinrichtung, beispielsweise mit Hilfe eines Kolbens in einem Geberzylinder, wird die Druckkammer mit Druckmittel beaufschlagt. Die Verbindung ist einfach, da Rohrleitungen oder Schläuche, deren Verbindungen und Befestigungen entfallen - weil der Kanal direkt in dem Material der Zwischenwand ausgebildet ist.

Eine Ausgestaltung der Erfindung sieht eine Bremse in der Antriebsvorrichtung vor, wobei die Bremse in Wirkverbindung mit dem Planetentrieb steht.

Vorzugsweise weist die Zwischenwand auch die Druckkammer für die Betätigungseinrichtung der Bremse auf, wobei bevorzugt ein Lagerschild zur Lagerung der Rotorwelle der elektrischen Maschine ist.

Die Druckkammer ist entweder in einem Zylinder ausgebildet, der in die Zwischenwand/das Lagerschild eingesetzt ist, oder ist direkt in dem Lagerschild ausgebildet. Letzteres schließt ein, dass die Begrenzungsflächen der Druckkammer inklusive der Gleitflächen für den Kolben zumindest teilweise aus dem Material der Zwischenwand/des Lagerschilds sind.

Der/die Kolben wirken zum Einlegen oder Lösen der Bremse auf Betätigungselemente wie Hebel, Stifte, Federn, Bremsbacken oder Seilzüge oder geben diese frei. Die Kolben drücken oder ziehen beim Einlegen oder Lösen der Bremse an den Betätigungselementen.

Insbesondere der oder die Ringkolben sind bevorzugt längs der Rotationsachse relativ zur Antriebswelle längs beweglich. Der oder die Ringkolben der Kupplung und der oder die Ringkolben der Bremse sind vorzugsweise konzentrisch zueinander um die Rotationsachse angeordnet.

Eine weitere Ausgestaltung der Erfindung sieht vor, dass die Zwischenwand wenigstens einen für das Druckmittel durchlässigen Kanal aufweist, der eine Gebereinrichtung und die Druckkammer für den Kolben der Betätigungseinrichtung der Bremse miteinander verbindet. Über die Gebereinrichtung, beispielsweise einen Geberzylinder, wird die Druckkammer mit Druckmittel druckbeaufschlagt. Die Verbindung ist einfach, da Rohrleitungen oder Schläuche, deren Verbindungen und Befestigungen entfallen. Bevorzugt sind beide Kanäle, also der für die Betätigungseinrichtung der Kupplung und der für die der Bremse, in der gleichen Zwischenwand ausgeführt.

Mit der Kupplung ist eine um die Rotationsachse Drehmomente übertragende Wirkverbindung wahlweise zwischen der Antriebswelle bzw. dem Sonnenrad und dem Planetenträger oder zwischen dem Planetenträger und dem Hohlrad des Planetentriebs herstellbar.

Unter Drehmomente übertragende Verbindungen sind Verbindungen zu verstehen, die durch Reibschluss, Kraftschluss, Formschluss oder magnetische Haftung bzw. Kombinationen dieser zwischen zwei Elementen zu verstehen, so dass mit oder ohne Schlupf Drehmomente von einem der Elemente des Planetentriebs zu dem anderen der Elemente des Planetentriebs weiter gegeben werden können. Alternativ dazu weist die Antriebsvorrichtung zwei oder mehr der Planetentriebe auf. In diesem Fall kann die Kupplung auch dafür vorgesehen sein, ein Element des einen Planetentriebs mit einem anderen Element des anderen Planetentriebs zu kuppeln und zu trennen. Die Elemente sind wahlweise Sonnenräder, Planetenträger oder Hohlräder.

Kupplungen sind Ein- oder Mehrscheiben, Nass- oder Trockenkupplungen, Klauen- oder Magnetkupplungen zu verstehen. Die Elemente der Kupplung wie Reibscheiben oder Lamellen, Druckplatten, Kupplungskörper usw. sind vorzugsweise ringförmig ausgebildet und konzentrisch zur Rotationsachse angeordnet.

Die Rotationsachse ist Hauptachse der Antriebsvorrichtung, zugleich Rotationsachse der Antriebswelle der elektrischen Maschine und auch zugleich zentrale Rotationsachse des Planetentriebs.

Eine weitere Ausgestaltung der Erfindung sieht vor, dass wenigstens ein Teil der Druckkammern, entweder die der Betätigungseinrichtung für die Kupplung oder für die der Bremse bzw. für beide, radial zwischen dem Stator und der Antriebswelle dem Stator radial gegenüberliegt. Die Druckkammer erstreckt sich in dem Lagerschild soweit axial in die elektrische Maschine hinein, dass diese zumindest teilweise von den Wicklungen des Stators umgeben ist. Die Antriebsvorrichtung ist dementsprechend vorteilhaft kompakt.

### Beschreibung der Zeichnungen

### 1. Figur 1 und Figuren 1a - 1d

### 1.1 Allgemeiner Aufbau der Antriebsvorrichtung

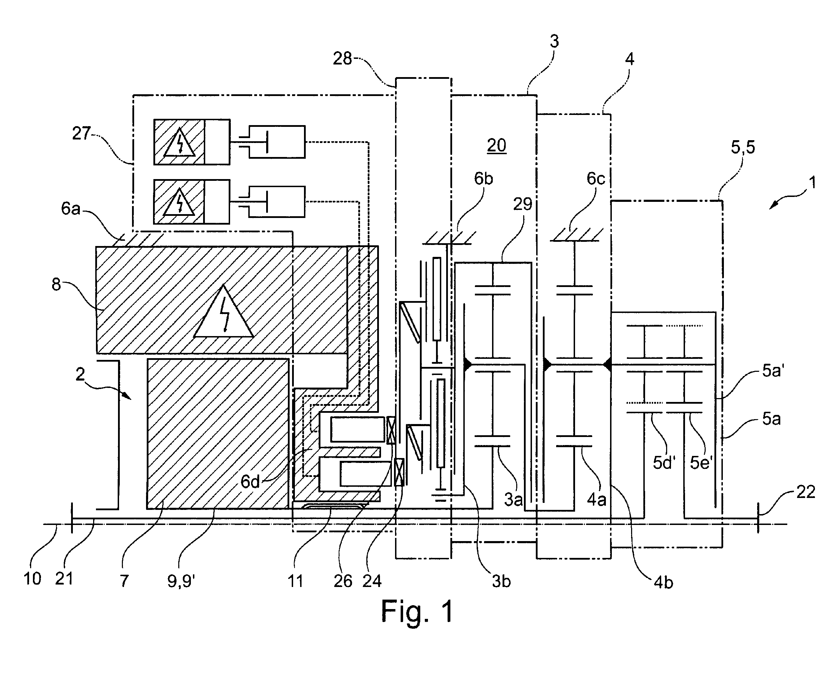

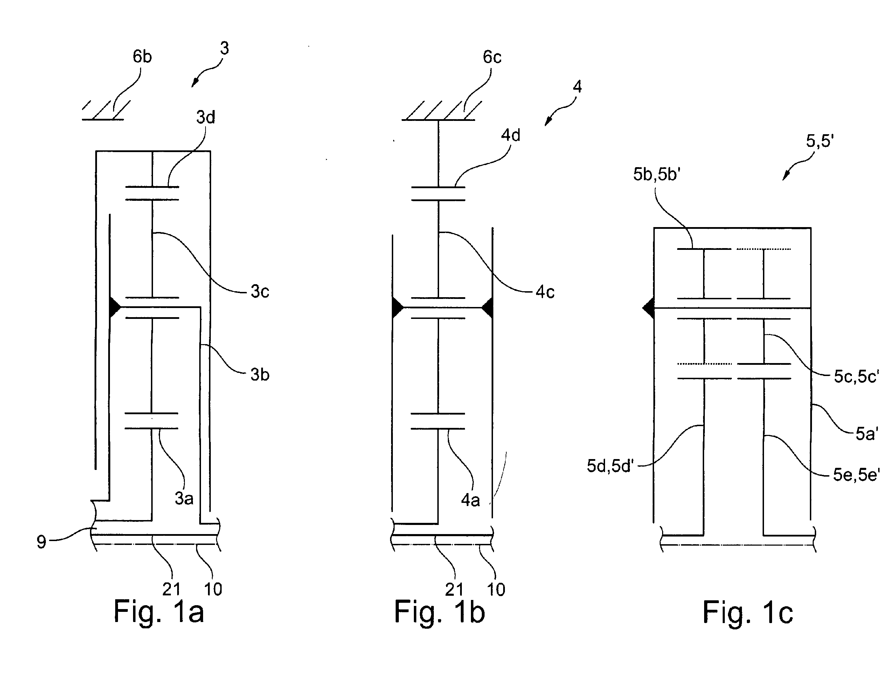

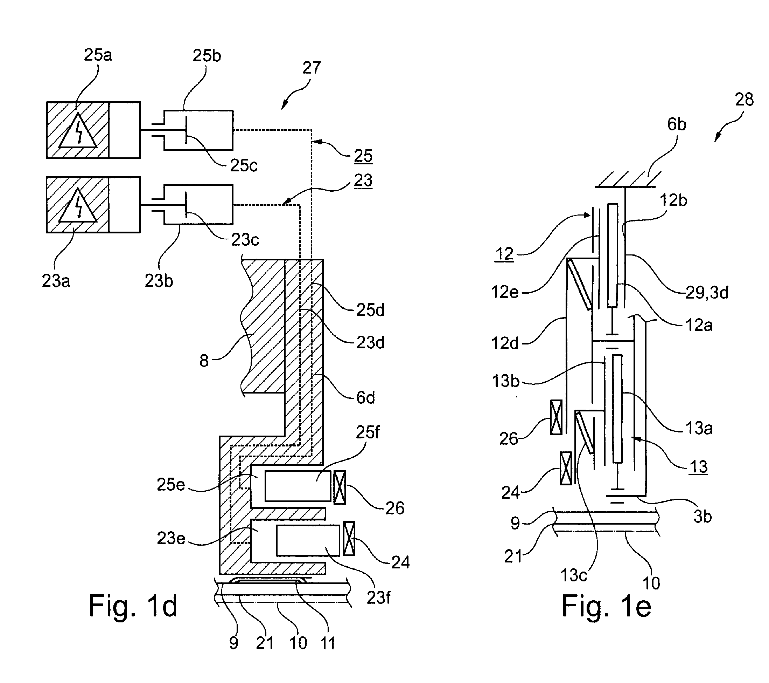

Figur 1 zeig schematisch einen Längsschnitt durch ein Ausführungsbeispiel einer Antriebsvorrichtung 1. Die Antriebsvorrichtung 1 weist eine elektrische Maschine 2, einen Betätigungsblock 27, einen Schaltblock 28, ein Zweigang-Planetengetriebe 20, und ein Differenzial 5 auf. Die elektrische Maschine 2, das Zweigang-Planetengetriebe 20 und das Differenzial 5 sind koaxial zueinander angeordnet und weisen als gemeinsame Hauptachse die Rotationsachse 10 bzw. eine axiale Verlängerung dieser, der Rotorwelle 9 und damit der Antriebswelle 9' auf.

### 1.2 Elektrische Maschine 2 und Gehäuse 6

Die elektrische Maschine 2 ist in einem Gehäuseabschnitt 6a eines in Figur 1 nicht vollständig dargestellten und mindestens dreiteilig aus den Gehäuseabschnitten 6a, 6b und 6c zusammengesetzten Gehäuses der Antriebsvorrichtung 1 aufgenommen und weist einen Rotor 7, einen Stator 8 und die Rotorwelle 9 auf. Die nur symbolisch angedeuteten und nicht näher dargestellten Gehäuseabschnitte 6a, 6b und 6c sind beispielsweise zur Bildung des Gehäuses der Antriebsvorrichtung miteinander verschraubt. Der Stator 8 sitzt zumindest rotationsfest in dem Gehäuseabschnitt 6a. Der Rotor 7 sitzt konzentrisch zumindest rotationsfest auf der Rotorwelle 9. Die Rotorwelle 9 ist mit dem Rotor 7 um die Rotationsachse 10 relativ zu dem Stator 8 drehbar an einer Lagerstelle 11 in einer als Lagerschild der elektrischen Maschine 2 ausgeführten Zwischenwand 6d des Gehäuses der Antriebsvorrichtung 1 gelagert. Die Zwischenwand 6d und der Stator 8 sind relativ zueinander unbeweglich, wobei die elektrische Maschine 2 und das Zweigang-Planetengetriebe 20 durch die Zwischenwand 6d räumlich voneinander getrennt sind.

### 1.3 Zweigang-Planetengetriebe 20 - Figuren 1, 1a und 1b

Das Zweigang-Planetengetriebe 20 weist einen ersten Planetentrieb 3 und einen zweiten Planetentrieb 4 auf.

Die Rotorwelle 9 ist Antriebswelle 9 der elektrischen Maschine 2 und ist mit einem Sonnenrad 3a des ersten Planetentriebs 3 wirkverbunden. Das um die Rotationsachse 10 rotationsfähige Sonnenrad 3a ist entweder einteilig mit der Antriebswelle 9 ausgebildet oder als separates Bauteil ausgebildet und mit dieser zumindest um die Rotationsachse 10 drehbar relativ zu dieser rotationsfest verbunden. Der erste Planetentrieb 3 ist mit dem zweiten Planetentrieb 4 über den um die Rotationsachse 10 rotationsfähigen Planetenträger 3b und über ein um die Rotationsachse 10 rotationsfähiges Sonnenrad 4a des zweiten Planetentriebs 4 wirkverbunden. Planetenträger 3b und Sonnenrad 4a sind entweder einteilig miteinander ausgebildet oder als jeweils separat ausgebildete Bauteile zumindest rotationsfest miteinander verbunden.

Das Zweigang-Planetengetriebe 20 ist mit dem Differenzial 5 über einen um die Rotationsachse 10 rotationsfähigen Planetenträger 4b des zweiten Planetentriebs 4 und einen Differenzialkorb 5a des Differenzials 5 wirkverbunden. Da das Differenzial 5 ein Planetendifferenzial 5' ist, ist der Differenzialkorb 5a der Planetenträger 5a' des Planetendifferenzials 5'.

Das Planetendifferenzial 5' ist über eine Sonne 5d' mit einer Antriebswelle 21 und über eine Sonne 5e' mit einer Antriebswelle 22 wirkverbunden. Die unabhängig voneinander um die Rotationsachse rotationsfähigen Abtriebswellen 21 und 22 führen jeweils zu nicht dargestellten angetriebenen Rädern oder jeweils zu einer angetriebenen Welle eines Fahrzeugs.

### 1.4 Erster Planetentrieb 3 - Figuren 1 und 1a

In Figur 1a ist der erste Planetentrieb 3 in einem Ausschnitt aus Figur 1 vergrößert dargestellt. Der erste Planetentrieb 3 ist aus der Sonne 3a, aus dem Planetenträger 3b, aus einem Satz Planeten 3c, von denen nur ein Planet dargestellt ist, und aus einem Hohlrad 3d gebildet. Der Planetenträger 3b und das Hohlrad 3d sind um die Rotationsachse 10 rotationsfähig in der Antriebsvorrichtung 1 gelagert. Die Planeten 3c sind auf Planetenbolzen drehbar an dem Planetenträger 3b gelagert und stehen im Zahneingriff mit der Sonne 3a und dem Hohlrad 3d.

### 1.5 Zweiter Planetentrieb 4 - Figuren 1 und 1b

In Figur 1b ist der zweite Planetentrieb 4 in einem Ausschnitt aus Figur 1 vergrößert dargestellt. Der zweite Planetentrieb 4 ist aus der Sonne 4a, dem Planetenträger 4b, aus einem Satz Planeten 4c, von denen nur ein Planet dargestellt ist, und aus einem Hohlrad 4d gebildet. Die Planeten 4c sind auf Planetenbolzen drehbar an dem Planetenträger 4b gelagert und stehen im Zahneingriff mit der Sonne 4a und dem Hohlrad 4d. Der Planetenträger 4b ist um die Rotationsachse 10 rotationsfähig in der Antriebsvorrichtung gelagert. Das Hohlrad 4d ist an dem Gehäuseabschnitt 6c ortsfest gehalten.

### 1.6 Planetendifferenzial 5 - Figuren 1 und 1c

In Figur 1c ist das Planetendifferenzial 5' in einem Ausschnitt aus Figur 1 vergrößert dargestellt. Das Planetendifferenzial 5' ist aus dem Planetenträger 5a', aus zwei Sätzen Ausgleichsrädern 5b und 5c in Form von Planeten 5b' bzw. 5c' und aus den Abtriebsrädern 5d und 5e in Form der Sonnen 5d' und 5e' gebildet. Die Planeten 5b' des einen Planetensatzes stehen im Zahneingriff mit der Sonne 5d' und die Planeten 5c' mit der Sonne 5e'. Außerdem steht jeweils ein Planet 5b' des einen Satzes mit einem Planet 5c' des anderen Planetensatzes im Zahneingriff. Beide Sätze Planeten 5b' und 5c' sind auf Planetenbolzen an dem Planetenträger 5a' drehbar gelagert. Die Sonnen 5d' und 5e' sind rotationsfest mit den Abtriebswellen 12 bzw. 22 verbunden. Der Planetenträger 5a' und die Sonnen 5d' und 5e' sind drehbar in der Antriebsvorrichtung 1 gelagert.

### 1.7 Schaltblock 28 -Figuren 1 und 1e

In Figur 1e ist der Schaltblock 28 in einem Ausschnitt aus Figur 1 vergrößert dargestellt. Der Schaltblock 28 ist durch eine Bremse 12 und eine Kupplung 13 gebildet. Bremse 12 und Kupplung 13 sind konzentrisch ineinander auf der Rotationsachse 10 angeordnet, wobei die Bremse 12 radial außen angeordnet ist.

### 1.8 Kupplung 13 - Figuren 1 und 1e

Die Kupplung 13 weist ein erstes Kupplungselement 13a auf, das um die Rotationsachse 10 rotationsfähig ist und rotationsfest mit dem Planetenträger 3b verbunden ist aber längs entlang der Rotationsachse 10 relativ zu dem Planetenträger 3b und zu dem Hohlrad 3d beweglich ist. Weiterhin ist die Kupplung 13 mit einer Druckplatte 13b versehen, welche um die Rotationsachse 10 drehfest mit dem Hohlrad 3d verbunden aber längs entlang der Rotationsachse 10 relativ zu dem Hohlrad 3d und zu dem Planetenträger 3b verschiebbar angeordnet ist. Das Kupplungselement 13a ist beispielsweise eine Kupplungsscheibe mit Reibbelägen. Zwischen der Druckplatte 13b und dem Hohlrad 3d ist eine Druckfeder 13c eingespannt.

### 1.9 Bremse 12 -Figuren 1 und 1 e

Die Bremse 12 weist eine Bremsscheibe 12a auf, welche um die Rotationsachse 10 rotationsfähig ist und drehfest mit dem Hohlrad 3d verbunden ist aber relativ zu diesem und zu einer Reibfläche 12b verschiebbar an dem Hohlrad 3d sitzt. Die Reibfläche 12c ist an dem Gehäuseabschnitt 6b fest. Eine Druckplatte 12c ist um die Rotationsachse 10 drehfest aber längs verschiebbar mit dem Hohlrad 3d verbunden und liegt der Bremsscheibe 12a axial gegenüber. Zwischen der Druckplatte 12c und dem Hohlrad 3d ist eine Druckfeder 12d eingespannt.

### 1.10 Betätigungsblock 27 -Figuren 1 und 1d

In Figur 1 d ist der Betätigungsblock 27 in einem Ausschnitt aus Figur 1 vergrößert dargestellt. Der Betätigungsblock 27 ist durch eine Betätigungseinrichtung 23 für die Kupplung 13 und durch eine Betätigungseinrichtung 25 für die Bremse 12 gebildet. Beide Betätigungseinrichtungen 23 und 25 sind anteilig außerhalb des Inneren der Gehäuseteile 6a, 6b bzw. 6c und anteilig in der Zwischenwand 6d axial zwischen der elektrischen Maschine 2 und dem Zweigang-Planetengetriebe 20 angeordnet.

Die Betätigungseinrichtung 23 weist eine Gebereinrichtung und wenigstens einen Kanal 23d, eine Druckkammer 23e eines Nehmerzylinders und einen Kolben 23f auf. Die Gebereinrichtung ist aus einem elektromotorischen Aktor 23a und aus einem Geberzylinder 23b mit Druckkolben 23c gebildet. Der Aktor 23a ist mit dem Druckkolben 23c verbunden, welcher längs beweglich in dem Geberzylinder 23b sitzt. Der Kanal 23d ist für ein Druckmedium wie z.B. für eine hydraulische Flüssigkeit durchlässig, ist zumindest teilweise in der Zwischenwand 6d ausgebildet und verbindet den Geberzylinder 23b der Gebereinrichtung mit der Druckkammer 23e. Die Druckkammer 23e ist in der Zwischenwand 6d entweder direkt ausgebildet oder der Nehmerzylinder ist mit der Druckkammer 23e in der Zwischenwand 6d aufgenommen. Ein Teil der Druckkammer 23e ist radial zwischen dem Stator 8 und der Antriebswelle 9 so angeordnet, dass diese dem Stator 8 radial gegenüberliegt. Geberzylinder 23b, Kanal 23d und Druckkammer 23e sind mit dem Druckmedium befüllt.

Die Antriebsvorrichtung 1 ist mit einer Betätigungseinrichtung 25 für die Bremse 12 versehen. Die Betätigungseinrichtung 25 weist eine Gebereinrichtung, welche mit einen elektromotorischen Aktor 25a, einen Geberzylinder 25b mit Druckkolben 25c versehen ist, auf. Weiterhin besteht die Betätigungseinrichtung aus wenigstens einem Kanal 25d, einer Druckkammer 25e eines Nehmerzylinders und aus einem Kolben 25f. Der Aktor 25a ist mit dem Druckkolben 25c verbunden, welcher längs beweglich in dem Geberzylinder 25b sitzt. Der Kanal 25d ist für ein Druckmedium wie für eine hydraulische Flüssigkeit durchlässig, ist zumindest teilweise in der Zwischenwand 6d ausgebildet und verbindet die Gebereinrichtung mit der Druckkammer 25e. Geberzylinder 25b, Kanal 25d und Druckkammer 25e sind mit dem Druckmedium befüllt.

### 1.11 Ausrücklager 24 und 26 -Figuren 1 und 1e

Zwischen dem Kolben 23f der Betätigungseinrichtung 23 und der Druckplatte 13b bzw. einem auf die Druckplatte 13b wirkenden Hebel der Kupplung 13 ist ein Ausrücklager 24 konzentrisch zur Rotationsachse 10 angeordnet, das ein Gleitlager alternativ ein Axialwälzlager oder ein Schrägwälzlager sein kann. Zwischen dem Kolben 25f der Betätigungseinrichtung 25 und der Druckplatte 12c der Bremse 12 ist ein Ausrücklager 26 konzentrisch zur Rotationsachse 10 angeordnet, das auch ein Gleitlager alternativ ein Axialwälzlager oder ein Schrägwälzlager sein kann.

### 1.12 Wirkzusammenhang zwischen dem Schaltblock und dem ersten Planetentrieb sowie zwischen Bremse und Kupplung - Figuren 1, 1a bis 1e

Mit dem Schaltblock 28 können ein erster Gang, ein zweiter Gang und eine Neutralstellung geschaltet werden. Dazu sind Wirkverbindungen zwischen der zweiten Welle 16 und einer sechsten Welle 29 des Planetentriebs 3 sowie der ortsfesten Umgebungskonstruktion, beispielsweise dem Gehäuse 6b herstellbar.

Die zweite Welle 16, ist, wie schon im Kapitel 1.3 beschrieben, der Planetenträger 3b des ersten Planetentriebs. Die sechste Welle 29 ist das Hohlrad 3d des Planetentriebs.

Durch Einlegen der Bremse 12 kann das Hohlrad 3d gegenüber der Umgebungskonstruktion festgelegt werden. Dazu verschiebt der Aktor 25a den Druckkolben 25c im Geberzylinder 25b und hydraulische Flüssigkeit aus dem Geberzylinder 25b über den Kanal 25d in die Druckkammer 25e. Die hydraulische Flüssigkeit in der Druckkammer 25e verschiebt den Kolben 25f gegen die Druckplatte 12c oder gegen einen auf die Druckplatte 12c wirkenden Hebel. Dadurch wird die Druckplatte 12c gegen den Widerstand der Druckfeder 12d axial gegen die Bremsscheibe 12a bewegt und die Bremse 12 zugespannt, wobei die Bremsscheibe 12a bei voller Wirkung der Bremse 12 zwischen der Druckplatte 12c und der Reibfläche 12b axial eingeklemmt ist. Das Hohlrad 3d ist somit gegenüber dem Gehäuseabschnitt 6b rotationsfest gelegt.

Das Hohlrad 3d und der Planetenträger 3b sind im ausgerückten Betriebszustand der Kupplung 13 zueinander um die Rotationsachse 10 relativbeweglich. Im ausgerückten Betriebszustand rotiert die Kupplungsscheibe (Kupplungselement 13a) zusammen mit dem Planetenträger 3b frei gegenüber der Druckplatte 13b und gegenüber dem Hohlrad 3d um die Rotationsachse 10.

Wenn die Kupplung 13 ausgerückt und die Bremse 12 eingelegt ist, werden von der Antriebswelle 9' über die erste Welle 15 in den ersten Planetentrieb 3 eingebracht, der damit seine Wirkung entfaltet und Drehmomente zur zweiten Welle 16 hin wandelt, weil sich die rotierenden Planetenräder 3c an dem rotationsfesten Hohlrad 3d abstützen können. Die Wirkung des Zweigang-Planetengetriebes ist durch die Wirkungen des ersten Planetensatzes 3 und des zweiten Planetensatzes 4 bestimmt.

Die Kupplung 13 wird eingerückt, in dem der Aktor 23a den Druckkolben 23c in dem Geberzylinder 23b bewegt und hydraulische Flüssigkeit aus dem Geberzylinder 23 verdrängt. Die hydraulische Flüssigkeit weicht über den Kanal 23d in die Druckkammer 23e aus und bewegt den Kolben 23f gegen die Druckplatte 13b, wodurch die Druckplatte 13b gegen den Widerstand der Druckfeder 13c axial gegen das Kupplungselement 13a gepresst wird. Das Kupplungselement 13a wird dadurch beispielsweise axial gegen eine Reibfläche an dem Hohlrad 3d gepresst und ein Reibschluss zwischen dem Kupplungselement 13a und dem Hohlrad 3d solange hergestellt, bis Planetenträger 3b und Hohlrad 3d über das Kupplungselement 13a reibschlüssig rotationsfest miteinander gekuppelt sind.

Ist die Bremse 12 eingelegt und die Kupplung 13 eingerückt, ist die Übertragung von Drehmomenten von der Antriebswelle 9' über die erste Welle 15 an die zweite Welle 16 blockiert, da das Hohlrad 3d an dem Gehäuseabschnitt 6b und gegenüber dem Planetenträger 3b unbeweglich gehalten ist.

Die Bremse 12 löst, indem der Druck am Kolben 12f aufgehoben ist und die Druckplatte 12c mit Unterstützung der Wirkung der Druckfeder 12d von der Bremsscheibe 12a abhebt und diese schließlich freigibt. Das Hohlrad 3d ist relativ zu dem Gehäuseabschnitt 6b um die Rotationsachse 10 rotationsfähig.

Wenn die Bremse 12 gelöst ist und die Kupplung 13 eingelegt ist, werden von der Antriebswelle 9' über die erste Welle 15 in den ersten Planetentrieb 3 eingebrachte Drehmomente unverändert direkt an die zweite Welle 16 und dritte Welle 17 weitergegeben, da der erste Planetentrieb 3 blockiert und seine Wirkung somit aufgehoben ist. Die Wirkung des Zweigang-Planetengetriebes 20 ist somit nur durch die Wirkung des zweiten Planetentriebs 4 bestimmt.

Die Kupplung 13 rückt aus, in dem der Druck am Kolben 23f aufgehoben ist und die Druckplatte 13b mit Unterstützung der Wirkung der Druckfeder 13c von der dem Kupplungselement 13a abhebt und dieses schließlich freigibt. Das Hohlrad 3d ist relativ zum Planetenträger 3b um die Rotationsachse 10 rotationsfähig.

Wenn die Bremse 12 gelöst ist und die Kupplung 13 ausgerückt ist, läuft der erste Planetentrieb 3 leer, da sich die rotierenden Planetenräder 13c nicht an dem Hohlrad 3d abstützen können, weil dieses dann mitrotiert. Es können keine Drehmomente von der Antriebswelle 9' auf die zweite Welle 16 weitergegeben werden.

### 2. Figur 2 und Figuren 2a sowie 2b,

### 2.1 Allgemeiner Aufbau der Antriebsvorrichtung

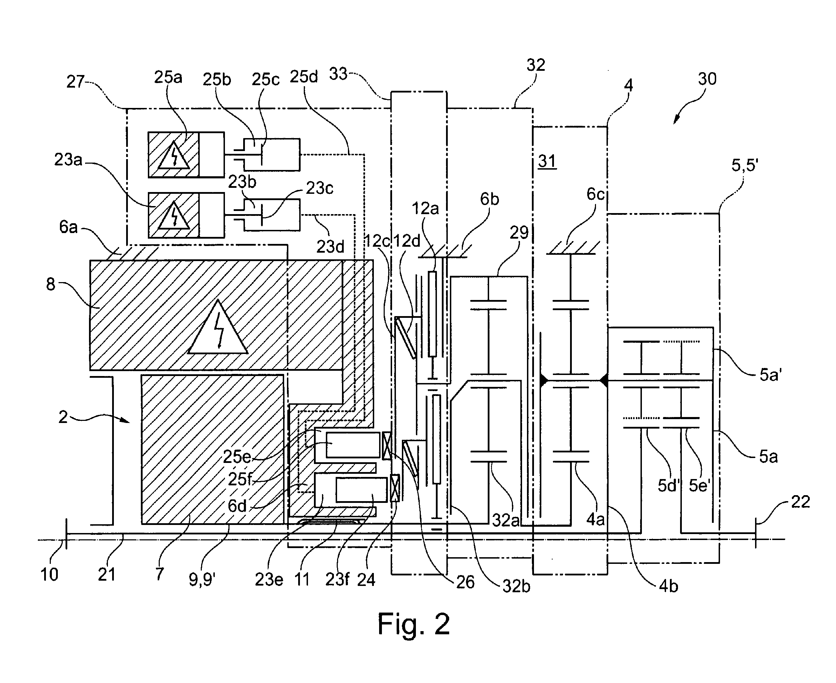

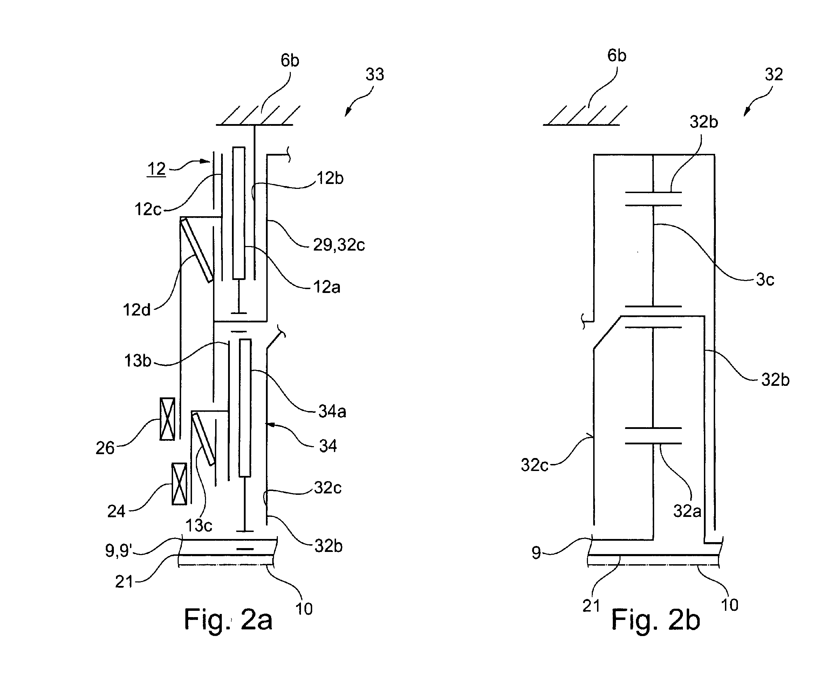

Figur 2 zeig schematisch einen Längsschnitt durch ein Ausführungsbeispiel einer Antriebsvorrichtung 30. Die Antriebsvorrichtung 1 weist eine elektrische Maschine 2, einen Betätigungsblock 27, einen Schaltblock 33, ein Zweigang-Planetengetriebe 31, und ein Differenzial 5 auf. Die elektrische Maschine 2, das Zweigang-Planetengetriebe 20 und das Differenzial 5 sind koaxial zueinander angeordnet und weisen als gemeinsame Hauptachse die Rotationsachse 10 bzw. eine axiale Verlängerung dieser, der Rotorwelle 9 und damit der Antriebswelle 9' auf.

### 2.2 Elektrische Maschine 2 und Gehäuse 6

Der Aufbau der elektrische Maschine 2 und des Gehäuses 6 entspricht dem in der Antriebsvorrichtung 1 nach Figur 1 und ist im Kapitel 1.2 beschrieben.

### 2.3 Zweigang-Planetengetriebe 31 - Figuren 2 und 2b

Das Zweigang-Planetengetriebe 31 weist einen ersten Planetentrieb 32 und einen zweiten Planetentrieb 4 auf. Der Aufbau entspricht im Wesentlichen dem Aufbau des Zweigang-Planetengetriebes 20 der Antriebsvorrichtung 1 nach Figur 1.

Die Rotorwelle 9 ist Antriebswelle 9 der elektrischen Maschine und ist mit dem ersten Planetentrieb 32 über eine erste Welle 15 wirkverbunden. Die erste Welle 15 des ersten Planetentriebs 32 ist eine um die Rotationsachse 10 rotationsfähige Sonne 32a, welche entweder einteilig mit der Antriebswelle 9 ausgebildet oder als separates Bauteil ausgebildet und mit dieser zumindest um die Rotationsachse 10 drehbar relativ zu dieser rotationsfest verbunden ist. Der erste Planetentrieb 32 ist mit dem zweiten Planetentrieb 4 über die zweite Welle 16 und eine dritte Welle 17 wirkverbunden. Die zweite Welle 16 ist der um die Rotationsachse 10 rotationsfähige Planetenträger 32b des ersten Planetentriebs 3. Die dritte Welle 17 ist eine um die Rotationsachse 10 rotationsfähige Sonne 4a des zweiten Planetentriebs 4. Die zweite Welle 16 und die dritte Welle 17 sind entweder einteilig miteinander ausgebildet oder als jeweils separat ausgebildete Bauteile zumindest rotationsfest miteinander verbunden.

Die Wirkverbindungen zwischen dem zweiten Planetentrieb 4 und dem Planetendifferenzial 5' sowie dem Planetendifferenzial 5' und den Antriebswellen 21 und 22 wird im Kapitel 1.3 beschrieben.

### 2.4 Erster Planetentrieb 32 - Figuren 2 und 2b

In Figur 2b ist der erste Planetentrieb 32 in einem Ausschnitt aus Figur 2 vergrößert dargestellt. Der erste Planetentrieb 32 ist aus der Sonne 32a, aus dem Planetenträger 32b, aus einem Satz Planeten 3c, von denen nur ein Planet dargestellt ist, und aus einem Hohlrad 32d gebildet. Der Planetenträger 32b und das Hohlrad 32d sind um die Rotationsachse 10 rotationsfähig zum Gehäuseabschnitt 6b in der Antriebsvorrichtung 1 gelagert. An dem Planetenträger 32b ist Stirnseitig eine Reibfläche 32c ausgebildet. Die Planeten 3c sind auf Planetenbolzen drehbar an dem Planetenträger 3b gelagert und stehen im Zahneingriff mit der Sonne 3a und dem Hohlrad 3d.

### 2.5 Zweiter Planetentrieb - Figuren 2 und 1b

Der Aufbau des zweiten Planetentriebs 4 des Zweigang-Planetengetriebes 31 entspricht dem des Zweigang-Planetengetriebes 20 nach Figur 1 und ist im Kapitel 1.5 beschrieben.

### 2.6 Planetendifferenzial 5' - Figuren 2 und 1c

Der Aufbau des Planetendifferenzials 5' der Antriebsvorrichtung 30 entspricht dem der Antriebsvorrichtung 1 und ist im Kapitel 1.6. beschrieben.

### 2.7. Schaltblock 33 -Figuren 2 und 2a

In Figur 2a ist der Schaltblock 33 in einem Ausschnitt aus Figur 2 vergrößert dargestellt. Der Schaltblock 33 ist durch eine Bremse 12 und eine Kupplung 34 gebildet. Bremse 12 und Kupplung 34 sind konzentrisch ineinander auf der Rotationsachse 10 angeordnet, wobei die Bremse 12 radial außen angeordnet ist.

### 2.8.1 Kupplung 34 - Figuren 2 und 2a

Die Kupplung 34 weist ein erstes Kupplungselement 34a auf, das um die Rotationsachse 10 rotationsfähig ist und rotationsfest mit der Rotorwelle 9 bzw. Antriebswelle 9' alternativ mit der Sonne 32b verbunden ist aber längs entlang der Rotationsachse 10 relativ zu dem Planetenträger 32b und zur Rotorwelle 9 beweglich ist. Weiterhin ist die Kupplung 34 mit einer Druckplatte 13b verbunden, welche um die Rotationsachse 10 drehfest mit dem Hohlrad 32d verbunden aber längs entlang der Rotationsachse 10 relativ zu dem Planetenträger 32b und zum Hohlrad 32d verschiebbar angeordnet ist. Das Kupplungselement 34a ist beispielsweise eine Kupplungsscheibe mit Reibbelägen. Dem Kupplungselement 34a liegt axial die Reibfläche 32c an dem Planetenträger 32b gegenüber. Zwischen der Druckplatte 13b und dem Hohlrad 32d ist eine Druckfeder 13c eingespannt.

### 2. 9 Bremse 12 -Figur 2 und 2a

Der Aufbau der Bremse 12 des Schaltblocks 33 der Antriebsvorrichtung 30 entspricht dem des Schaltblocks 28 der Antriebsvorrichtung 1 und ist nach Figur 1e im Kapitel 1.9 beschrieben.

### 2.10 Betätigungsblock 27 - Figuren 2 und 1d

Der Aufbau des Betätigungsblocks 27 der Antriebsvorrichtung 33 entspricht dem der Antriebsvorrichtung 1 und ist nach Figur 1 d im Kapitel 1.10 beschrieben.

### 2.11 Ausrücklager 24 und 26 -Figuren 1 und 1e

Aufbau und Anordnung der Ausrücklager 24 und 26 sind im Kapitel 1.11 beschrieben.

### 2.12 Wirkzusammenhang zwischen dem Schaltblock und dem ersten Planetentrieb sowie zwischen Bremse und Kupplung - Figuren 2 bis 2b und Figur 1d

Mit dem Schaltblock 33 können ein erster Gang, ein zweiter Gang und eine Neutralstellung geschaltet werden. Dazu sind Wirkverbindungen zwischen der ersten Welle 15 sowie der zweiten Welle 16 und einer sechsten Welle 29 des Planetentriebs 32 sowie der ortsfesten Umgebungskonstruktion, beispielsweise dem Gehäuse 6b herstellbar. Die erste Welle 15 ist die Antriebswelle 9' bzw. die Sonne 32a und zweite Welle 16 ist, wie schon im Kapitel 1.3 beschrieben, der Planetenträger 32b des ersten Planetentriebs 32. Die sechste Welle 29 ist das Hohlrad 32d des Planetentriebs 32.

Durch Einlegen der Bremse 12 kann das Hohlrad 32d gegenüber der Umgebungskonstruktion festgelegt werden. Dazu verschiebt der Aktor 25a den Druckkolben 25c im Geberzylinder 25b und hydraulische Flüssigkeit aus dem Geberzylinder 25b über den Kanal 25d in die Druckkammer 25e. Die hydraulische Flüssigkeit in der Druckkammer 25e verschiebt den Kolben 25f gegen die Druckplatte 12c oder gegen einen auf die Druckplatte 12c wirkenden Hebel. Dadurch wird die Druckplatte 12c gegen den Widerstand der Druckfeder 12d axial gegen die Bremsscheibe 12a bewegt und die Bremse 12 zugespannt, wobei die Bremsscheibe 12a bei voller Wirkung der Bremse 12 zwischen der Druckplatte 12c und der Reibfläche 12b axial eingeklemmt ist. Das Hohlrad 32d ist somit gegenüber dem Gehäuseabschnitt 6b rotationsfest gelegt.

Der Planetenträger 32b und die Sonne 32a sind im ausgerückten Betriebszustand der Kupplung 34 zueinander um die Rotationsachse 10 relativbeweglich. Im ausgerückten Betriebszustand rotiert die Kupplungsscheibe (Kupplungselement 34a) zusammen mit der Sonne 32a frei gegenüber der Druckplatte 13b und gegenüber dem Planetenträger 32b.

Wenn die Kupplung 34 ausgerückt und die Bremse 12 eingelegt ist, werden von der Antriebswelle 9' über die erste Welle 15 in den ersten Planetentrieb 34 eingebracht, der damit seine Wirkung entfaltet und Drehmomente zur zweiten Welle 16 hin wandelt, weil sich die rotierenden Planetenräder 3c an dem rotationsfesten Hohlrad 32d abstützen können. Die Wirkung des Zweigang-Planetengetriebes 31 ist durch die Wirkungen des ersten Planetensatzes 32 und des zweiten Planetensatzes 4 bestimmt.

Die Kupplung 34 wird eingerückt, in dem der Aktor 23a den Druckkolben 23c in dem Geberzylinder 23b bewegt und hydraulische Flüssigkeit aus dem Geberzylinder 23 verdrängt. Die hydraulische Flüssigkeit weicht über den Kanal 23d in die Druckkammer 23e aus und bewegt den Kolben 23f gegen die Druckplatte 13b, wodurch die Druckplatte 13b gegen den Widerstand der Druckfeder 13c axial gegen das Kupplungselement 34a gepresst wird. Das Kupplungselement 34a wird dadurch gegen die Reibfläche 32c an dem Planetenträger 32b gepresst und ein Reibschluss zwischen dem Kupplungselement 34a und dem Planetenträger 32b solange hergestellt, bis Planetenträger 32b und Sonne 32a über das Kupplungselement 34a reibschlüssig rotationsfest miteinander gekuppelt sind.

Ist die Bremse 12 eingelegt und die Kupplung 34 eingerückt, ist die Übertragung von Drehmomenten von der Antriebswelle 9' über die erste Welle 15 an die zweite Welle 16 blockiert, da das Hohlrad 32d an dem Gehäuseabschnitt 6b und der Planetenträger 32b und die Sonne 32a rotationsunbeweglich aneinander gehalten sind.

Die Bremse 12 löst, indem der Druck am Kolben 12f aufgehoben ist und die Druckplatte 12c mit Unterstützung der Wirkung der Druckfeder 12d von der Bremsscheibe 12a abhebt und diese schließlich freigibt. Das Hohlrad 32d ist relativ zu dem Gehäuseabschnitt 6b um die Rotationsachse 10 rotationsfähig. Wenn die Bremse 12 gelöst ist und die Kupplung 34 eingelegt ist, werden von der Antriebswelle 9' über die erste Welle 15 in den ersten Planetentrieb 34 eingebrachte Drehmomente unverändert direkt an die zweite Welle 16 und dritte Welle 17 weitergegeben, da der erste Planetentrieb 34 blockiert und seine Wirkung somit aufgehoben ist. Die Wirkung des Zweigang-Planetengetriebes 31 ist somit nur durch die Wirkung des zweiten Planetentriebs 4 bestimmt.

Die Kupplung 34 rückt aus, in dem der Druck am Kolben 23f aufgehoben ist und die Druckplatte 13b mit Unterstützung der Wirkung der Druckfeder 13c von der dem Kupplungselement 34a abhebt und dieses schließlich freigibt. Sonne 32a und Planetenträger 3b sind relativ zueinander um die Rotationsachse 10 rotationsfähig.

Wenn die Bremse 12 gelöst ist und die Kupplung 34 ausgerückt ist, läuft der erste Planetentrieb 34 leer, da sich die rotierenden Planetenräder 13c nicht an dem Hohlrad 32d abstützen können, weil dieses dann mitrotiert. Es können keine Drehmomente von der Antriebswelle 9' auf die zweite Welle 16 weitergegeben werden.

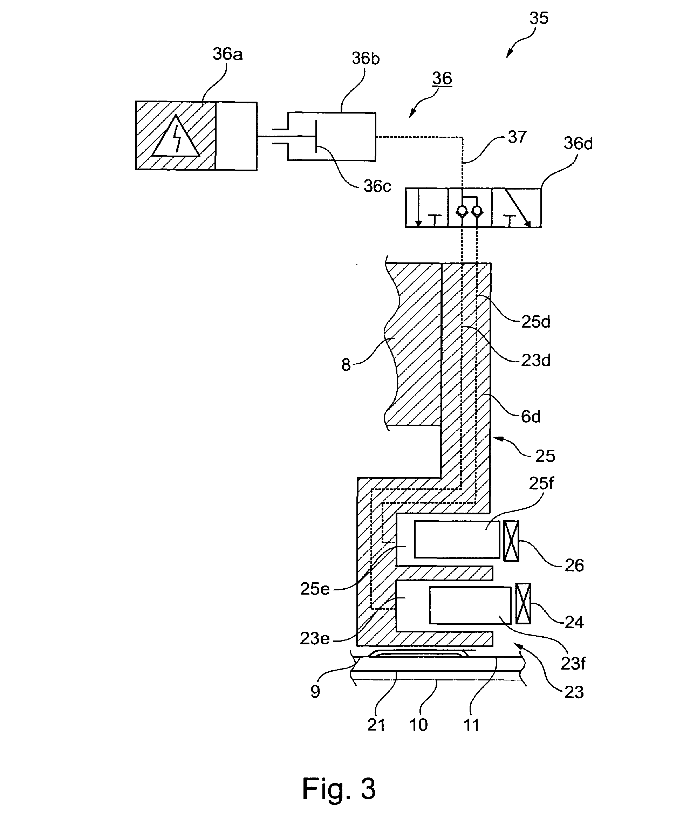

### 3. Betätigungsblock 35 -Figuren 3, 4 und 5

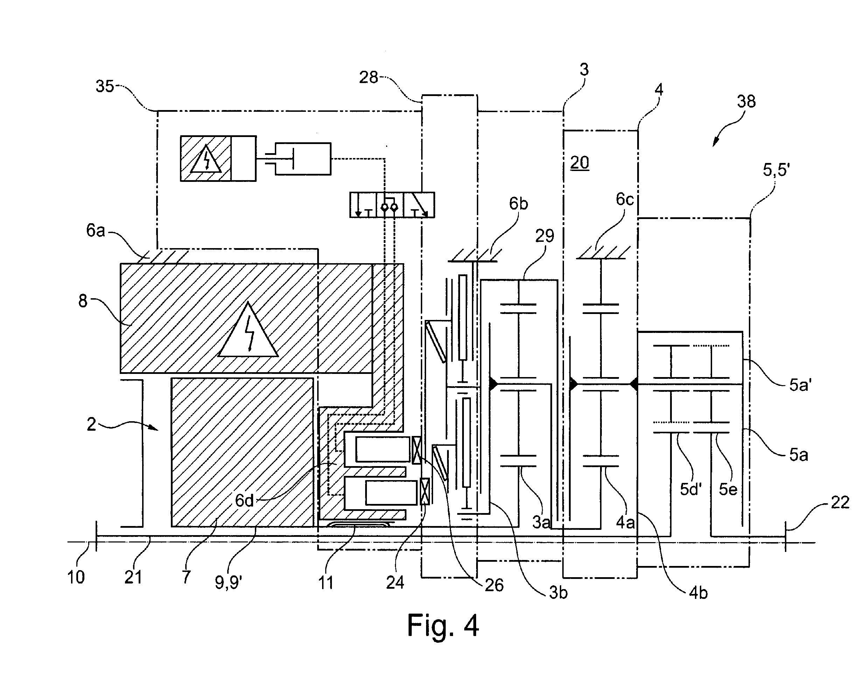

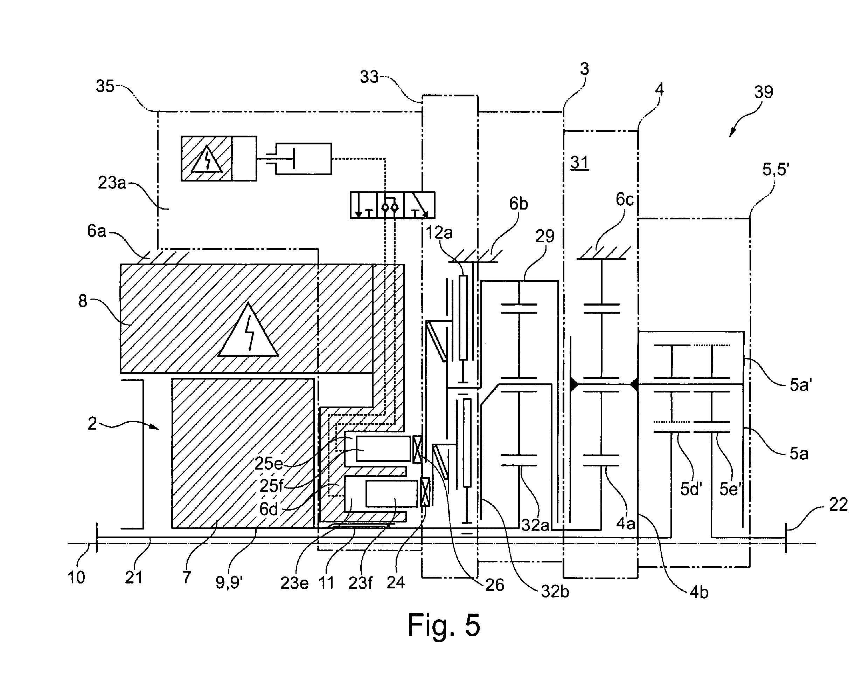

In Figur 3 ist ein Betätigungsblock 35 in einem Ausschnitt der Figuren 4 oder 5 vergrößert dargestellt. Der Betätigungsblock 35 ist eine Alternative zu dem Betätigungsblock 27 nach Figur 1. Die Betätigungseinrichtungen 23 und 25 weisen eine gemeinsame Ansteuerung 36 auf, die durch einen elektromotorischen Aktor 36a, einen Geberzylinder 36b mit einem Druckkolben 36c und durch ein Mehrwegventil 36d gebildet ist. Der Geberzylinder 36b ist über mindestens einen Kanal 37 mit dem Mehrwegeventil 36d verbunden. Von dem Mehrwegeventil 36d führen die Kanäle 23d bzw. 25d zu den Druckkammern 23e bzw. 25e. Über das Mehrwegeventil 36d ist es möglich, den Geberzylinder 36b und den Kanal 37 entweder mit dem Kanal 23d und damit der Druckkammer 23e oder mit dem Kanal 25d und damit mit der Druckkammer 25e zu verbinden. Eine Ansteuerung beider Druckkammern 23e und 25e zugleich kann mit dem Mehrwegeventil 36d entweder ausgeschlossen oder als weitere Schaltoption vorgesehen sein.

### 4. Antriebsvorrichtung 38, Figuren 4, 1a-c, Figuren 1e und 3

Figur 4 zeigt eine Antriebsvorrichtung 38 die im Wesentlichen wie die Antriebsvorrichtung 1 aufgebaut und mit Ausnahme des Kapitels 1.10 im Kapitel 1 beschrieben ist. Der Unterschied der Antriebsvorrichtung 38 zur Antriebsvorrichtung 1 liegt darin, dass die Antriebsvorrichtung 38 anstelle des Betätigungsblocks 27 den im Kapitel 3 beschriebenen Betätigungsblock 35 aufweist.

### 5. Antriebsvorrichtung 39, Figuren 5, 2a - 2b und Figur 3

Figur 5 zeigt eine Antriebsvorrichtung 39 die im Wesentlichen wie die Antriebsvorrichtung 30 aufgebaut und die mit Ausnahme des Kapitels 2.10 im Kapitel 2 beschrieben ist. Der Unterschied der Antriebsvorrichtung 39 zur Antriebsvorrichtung 30 liegt darin, dass die Antriebsvorrichtung 39 anstelle des Betätigungsblocks 27 den im Kapitel 3 beschriebenen Betätigungsblock 35 aufweist.

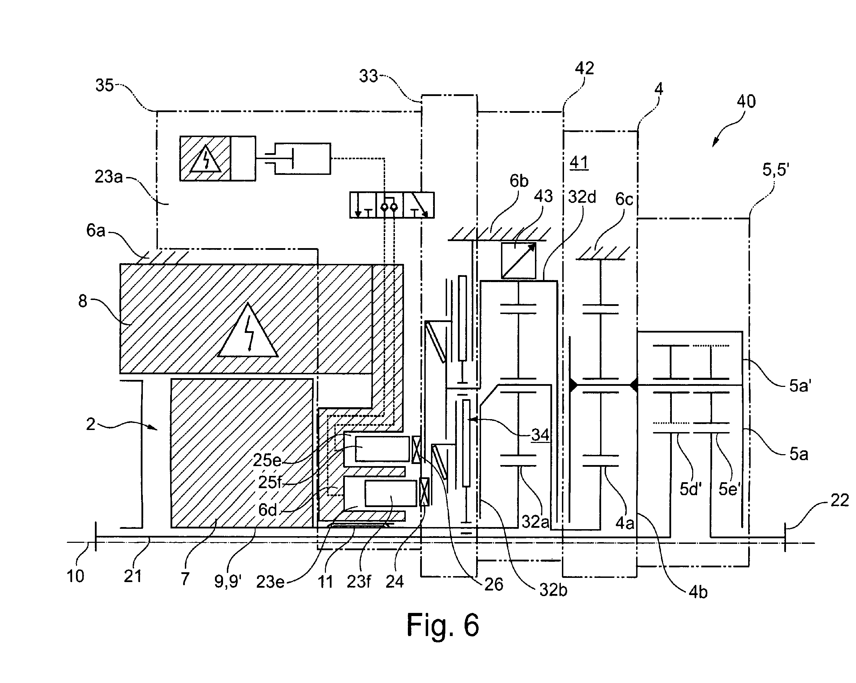

### 6. Antriebsvorrichtung 40, Figuren 6, 2a - 2b und Figur 3

Figur 6 zeigt eine Antriebsvorrichtung 40, in der alternativ zu der im Kapitel 5 beschriebenen Antriebsvorrichtung 39 in einem Zweigang-Planetentrieb 41 der erste Planetentrieb 42 eine Freilaufkupplung 43 aufweist. Die Freilaufkupplung 43 sitzt zwischen dem Hohlrad 32d und dem Gehäuseabschnitt 6b. Die Freilaufkupplung 43 verringert beim Wechsel der Gänge, in dem die Freilaufkupplung 43 nach dem Lösen der Bremse 12 das Hohlrad 32d vorübergehend weiterhin sperrt und erst bei Einsetzen der Wirkung der einrückenden Kupplung 34 freigibt. Der Aufbau der Antriebsvorrichtung 40 entspricht ansonsten dem Aufbau der Antriebsvorrichtung 39 und ist im Kapitel 5 beschrieben.

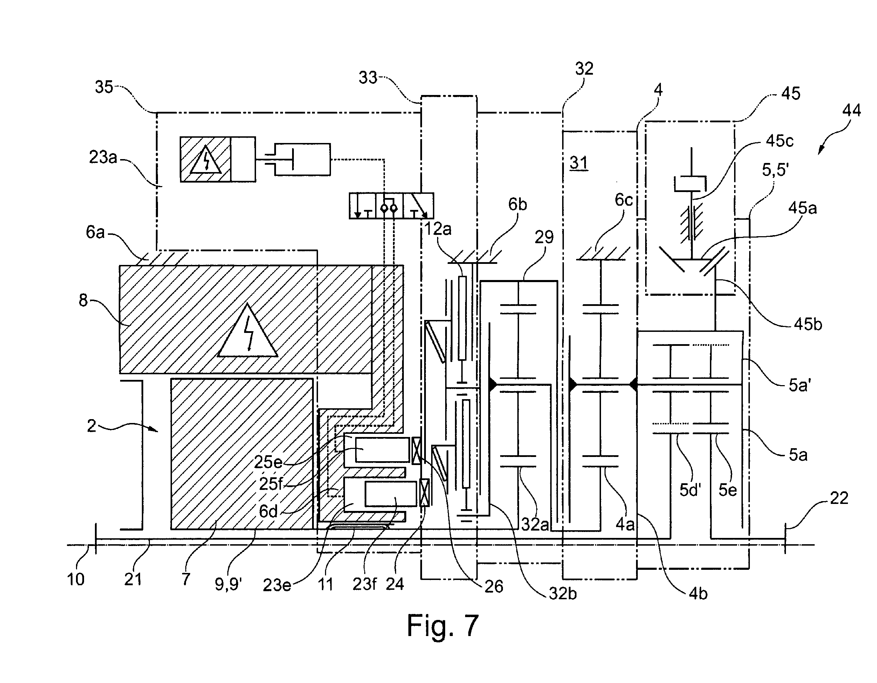

### Antriebsvorrichtung 44, Figuren 7, 2a - 2b und Figur 3

Figur 7 zeigt eine Antriebsvorrichtung 44, die im Wesentlichen wie die Antriebsvorrichtung 30 aufgebaut und mit Ausnahme des Kapitels 2.10 im Kapitel 2 beschrieben ist. Die Antriebsvorrichtung ist zusätzlich über einen Winkeltrieb 45 mit einem von der elektrischen Maschine unabhängigen zweiten Antrieb verbunden. Weiterhin unterscheidet sich die Antriebsvorrichtung 44 von der Antriebsvorrichtung 30, dass sie anstelle des Betätigungsblocks 27 den im Kapitel 3 beschriebenen Betätigungsblock 35 aufweist.

Der Winkeltrieb 45 weist eine Ritzelwelle 45c mit einem Ritzel 45a auf, die mit einem Tellerrad 45b im Zahneingriff steht. Das Tellerrad 45b ist an dem Planetenträger 5a befestigt. Der Planetenträger 5a kann über den Winkeltrieb um die Rotationsachse 10 rotierend angetrieben werden.

**Bezugszeichen**

| | | | |
|---|---|---|---|
| 1 | Antriebsvorrichtung | 23a | Aktor |
| 2 | elektrische Maschine | 23b | Geberzylinder |
| 3 | erster Planetentrieb | 23c | Druckkolben |
| 3a | Sonne | 23d | Kanal |
| 3b | Planetenträger | 23e | Druckkammer |
| 3c | Planet | 23f | Kolben |
| 3d | Hohlrad | | |
| 4 | zweiter Planetentrieb | 24 | Ausrücklager |
| 4a | Sonne | 25 | Betätigungseinrichtung |
| 4b | Planetenträger | 25a | Aktor |
| 4c | Planet | 25b | Geberzylinder |
| 4d | Hohlrad | 25c | Druckkolben |
| 5/5' | Differenzial/Planetendifferenzial | 25d | Kanal |
| 5a/5a' | Differenzialkorb/Planetenträger | 25e | Druckkammer |
| 5b/5b' | Ausgleichsrad/Planet | 25f | Kolben |
| 5c/5c' | Ausgleichsrad/Planet | | |
| 5d/5d' | Abtriebsrad/Sonne | 26 | Ausrücklager |
| 5e/5e' | Abtriebsrad/Sonne | 27 | Betätigungsblock |
| 6 | - | 28 | Schaltblock |
| 6a | Gehäuseabschnitt | 29 | sechste Welle |
| 6b | Gehäuseabschnitt | 30 | Antriebsvorrichtung |
| 6c | Gehäuseabschnitt | 31 | Zweigang-Planetengetriebe |
| 6d | Zwischenwand | 32 | erster Planetentrieb |
| 7 | Rotor | 32a | Sonne |
| 8 | Stator | 32b | Planetenträger |
| 9/9' | Rotorwelle/Antriebswelle | 32c | Reibfläche |
| 10 | Rotationsachse | 32d | Hohlrad |
| 11 | Lagerstelle | 33 | Schaltblock |
| 12 | Bremse | 34 | Kupplung |
| 12a | Bremsscheibe | 34a | Kupplungselement |
| 12b | Reibfläche | 35 | Betätigungsblock |
| 12c | Druckplatte | 36 | Ansteuerung |
| 12d | Druckfeder | 36a | Aktor |
| 13 | Kupplung | 36b | Geberzylinder |
| 13a | Kupplungselement | 36c | Druckkolben |
| 13b | Druckplatte | 36d | Mehrwegeventil |
| 13c | Druckfeder | 37 | Kanal |
| 14 | Freilaufkupplung | 38 | Antriebsvorrichtung |
| 15 | - | 39 | Antriebsvorrichtung |
| 16 | - | 40 | Antriebsvorrichtung |
| 17 | - | 41 | Zweigang-Planetentrieb |
| 18 | - | 42 | erster Planetentrieb |
| 19 | - | 43 | Freilaufkupplung |
| 20 | Zweigang-Planetengetriebe | 44 | Antriebsvorrichtung |
| 21 | Antriebswelle | 45 | Winkeltrieb |
| 22 | Antriebswelle | 45a | Ritzel |
| 23 | Betätigungseinrichtung | 45b | Tellerrad |
| | | 45c | Ritzelwelle |
| | | | |

## Patentansprüche

1. Antriebsvorrichtung (1, 38, 39, 40, 44) mit wenigstens einer elektrischen Maschine (2), mit mindestens einem Planetentrieb (3, 32, 42), mit einem Differenzial (5, 5') und mit einer um eine Rotationsachse (10) Drehmomente übertragenden Wirkverbindung zwischen einer Antriebswelle (9) der elektrischen Maschine (2) und dem Planetentrieb (3, 32, 42) und einer weiteren Drehmomente übertragenden Wirkverbindung zwischen dem Planetentrieb (3, 32, 42) und dem Differenzial (5, 5'), wobei die Antriebsvorrichtung (1, 38, 39, 40, 44) wenigstens eine mit dem Planetentrieb (3, 32, 42) wirkverbundene Kupplung (13, 34) mit einer durch Druckmittel beaufschlagbaren Betätigungseinrichtung (23) für die Kupplung (13, 34) aufweist, wobei die Betätigungseinrichtung (23) wenigstens einen in einer Druckkammer (23e) verschiebbaren Kolben (23f) aufweist, **dadurch gekennzeichnet, dass** eine Zwischenwand (6d) eines Gehäuses der Antriebsvorrichtung (1, 38, 39, 40, 44) die Druckkammer (23e) aufweist, wobei die Zwischenwand (6d) längs zwischen der elektrischen Maschine (2) und der Kupplung (13, 34) angeordnet ist.

2. Antriebsvorrichtung nach Anspruch 1, **dadurch gekennzeichnet, dass** die Zwischenwand (6d) ein Lagerschild der elektrischen Maschine (2) ist, wobei die mit einem Rotor (7) der elektrischen Maschine (2) verbundene Antriebswelle (9) der elektrischen Maschine (2) relativ zu einem Stator (8) der elektrischen Maschine (2) um die Rotationsachse (10) drehbar in der Zwischenwand (6d) gelagert ist und wobei die Druckkammer (23e) in dem Lagerschild ausgebildet ist.

3. Antriebsvorrichtung nach Anspruch 1, **dadurch gekennzeichnet, dass** der Kolben (23f) ein konzentrisch zur Rotationsachse (10) der Antriebswelle (9) angeordneter sowie durch das Druckmittel beaufschlagbaren ringförmiger Kolben (23f) ist.

4. Antriebsvorrichtung nach Anspruch 1 oder 3, **dadurch gekennzeichnet, dass** der Kolben (23f) längs der Rotationsachse (10) relativ zur Antriebswelle (9) längs beweglich ist und ein Kupplungselement (13a) der Kupplung (13, 34) mit dem Kolben (23f) beaufschlagbar ist.

5. Antriebsvorrichtung nach Anspruch 3, **dadurch gekennzeichnet, dass** die Zwischenwand (6d) wenigstens einen für das Druckmittel durchlässigen Kanal (23d, 25d) aufweist, der eine Gebereinrichtung und die Druckkammer (23e) miteinander verbindet.

6. Antriebsvorrichtung nach Anspruch 1, **gekennzeichnet durch** eine Bremse (12), wobei die Bremse (12) in Wirkverbindung mit dem Planetentrieb (3, 32, 42) steht.

7. Antriebsvorrichtung nach Anspruch 6, **dadurch gekennzeichnet, dass** die Antriebsvorrichtung (1, 38, 39, 40, 44) eine mit Druckmittel beaufschlagbare weitere Betätigungseinrichtung (25) für die Bremse (12) aufweist, welche mit einem weiteren mit dem Druckmittel beaufschlagbaren Kolben (25f) versehen ist.

8. Antriebsvorrichtung nach Anspruch 7, **dadurch gekennzeichnet, dass** der weitere Kolben (25f) in einer mit dem Druckmittel befüllbaren weiteren Druckkammer (25e) längsbeweglich angeordnet ist, welche in der Zwischenwand (6d) des Gehäuses der Antriebsvorrichtung (1, 38, 39, 40, 44) ausgebildet ist, wobei die mit einem Rotor (7) der elektrischen Maschine (2) verbundene Antriebswelle (9) relativ zu einem Stator (8) der elektrischen Maschine (2) um die Rotationsachse (10) drehbar in der Zwischenwand (6d) gelagert ist.

9. Antriebsvorrichtung nach Anspruch 8, **dadurch gekennzeichnet, dass** die Zwischenwand (6d) wenigstens einen weiteren für das Druckmittel durchlässigen Kanal (25d) aufweist, der eine weitere Gebereinrichtung und die weitere Druckkammer (25e) miteinander verbindet.

10. Antriebsvorrichtung nach Anspruch 1 oder 7, **dadurch gekennzeichnet, dass** wenigstens ein Teil der wenigstens einen Druckkammer (23e, 25e) radial zwischen dem Stator (8) und der Antriebswelle (9) dem Stator (8) radial gegenüberliegt.

## Claims

1. Drive device (1, 38, 39, 40, 44) with at least one electric machine (2), with at least one planetary gear (3, 32, 42), with a differential (5, 5') and with an operative connection, transmitting torques about an axis of rotation (10), between a drive shaft (9) of the electric machine (2) and the planetary gear (3, 32, 42) and a further operative connection, transmitting torques, between the planetary gear (3, 32, 42) and the differential (5, 5'), the drive device (1, 38, 39, 40, 44) having at least one clutch (13, 34) operatively connected to the planetary gear (3, 32, 42) and having an actuating device (23), capable of being acted upon by pressure medium, for the clutch (13, 34), the actuating device (23) having at least one piston (23f) displaceable in a pressure chamber (23e), **characterized in that** an intermediate wall (6d) of a housing of the drive device (1, 38, 39, 40, 44) has the pressure chamber (23e), the intermediate wall (6d) being arranged longitudinally between the electric machine (2) and the clutch (13, 34).

2. Drive device according to Claim 1, **characterized in that** the intermediate wall (6d) is a bearing plate of the electric machine (2), the drive shaft (9), connected to a rotor (7) of the electric machine (2), of the electric machine (2) being mounted in the intermediate wall (6d) rotatably about the axis of rotation (10) in relation to a stator (8) of the electric machine (2), and the pressure chamber (23e) being formed in the bearing plate.

3. Drive device according to Claim 1, **characterized in that** the piston (23f) is a ring-shaped piston (23f) arranged concentrically to the axis of rotation (10) of the drive shaft (9) and capable of being acted upon by the pressure medium.

4. Drive device according to Claim 1 or 3, **characterized in that** the piston (23f) is movable longitudinally in relation to the drive shaft (9) along the axis of rotation (10), and a clutch element (13a) of the clutch (13, 34) is capable of being acted upon by the piston (23f).

5. Drive device according to Claim 3, **characterized in that** the intermediate wall (6d) has at least one duct (23d, 25d) which is permeable to the pressure medium and which connects a master device and the pressure chamber (23e) to one another.

6. Drive device according to Claim 1, **characterized by** a brake (12), the brake (12) being operatively connected to the planetary gear (3, 32, 42).

7. Drive device according to Claim 6, **characterized in that** the drive device (1, 38, 39, 40, 44) has a further actuating device (25) for the brake (12), which further actuating device is capable of being acted upon by pressure medium and is provided with a further piston (25f) capable of being acted upon by the pressure medium.

8. Drive device according to Claim 7, **characterized in that** the further piston (25f) is arranged longitudinally movably in a further pressure chamber (25e) which is capable of being filled with the pressure medium and which is formed in the intermediate wall (6d) of the housing of the drive device (1, 38, 39, 40, 44), the drive shaft (9) connected to a rotor (7) of the electric machine (2) being mounted in the intermediate wall (6d) rotatably about the axis of rotation (10) in relation to a stator (8) of the electric machine (2).

9. Drive device according to Claim 8, **characterized in that** the intermediate wall (6d) has at least one further duct (25d) which is permeable to the pressure medium and which connects a further master device and the further pressure chamber (25e) to one another.

10. Drive device according to Claim 1 or 7, **characterized in that** at least part of the at least one pressure chamber (23e, 25e) lies radially opposite the stator (8) radially between the stator (8) and the drive shaft (9).

## Revendications

1. Dispositif d'entraînement (1, 38, 39, 40, 44) comprenant au moins une machine électrique (2) avec au moins une transmission planétaire (3, 32, 42), avec un différentiel (5, 5') et avec une liaison fonctionnelle transmettant des couples autour d'un axe de rotation (10) entre un arbre d'entraînement (9) de la machine électrique (2) et la transmission planétaire (3, 32, 42) et une autre liaison fonctionnelle transmettant des couples entre la transmission planétaire (3, 32, 42) et le différentiel (5, 5'), le dispositif d'entraînement (1, 38, 39, 40, 44) présentant au moins un embrayage (13, 34) en liaison fonctionnelle avec la transmission planétaire (3, 32, 42) avec un dispositif d'actionnement (23) pour l'embrayage (13, 34) pouvant être sollicité par un fluide sous pression, le dispositif d'actionnement (23) présentant au moins un piston (23f) déplaçable dans une chambre de pression (23e), **caractérisé en ce qu'**une paroi intermédiaire (6d) d'un boîtier du dispositif d'entraînement (1, 38, 39, 40, 44) présente la chambre de pression (23e), la paroi intermédiaire (6d) étant disposée longitudinalement entre la machine électrique (2) et l'embrayage (13, 34).

2. Dispositif d'entraînement selon la revendication 1, **caractérisé en ce que** la paroi intermédiaire (6d) est un flasque de palier de la machine électrique (2), l'arbre d'entraînement (9) de la machine électrique (2) connecté à un rotor (7) de la machine électrique (2) étant supporté par rapport à un stator (8) de la machine électrique (2) de manière à pouvoir tourner autour de l'axe de rotation (10) dans la paroi intermédiaire (6d) et la chambre de pression (23e) étant réalisée dans le flasque de palier.

3. Dispositif d'entraînement selon la revendication 1, **caractérisé en ce que** le piston (23f) est un piston (23f) de forme annulaire disposé de manière concentrique par rapport à l'axe de rotation (10) de l'arbre d'entraînement (9) et pouvant être sollicité par le fluide sous pression.

4. Dispositif d'entraînement selon la revendication 1 ou 3, **caractérisé en ce que** le piston (23f) est déplaçable longitudinalement le long de l'axe de rotation (10) par rapport à l'arbre d'entraînement (9) et un élément d'accouplement (13a) de l'embrayage (13, 34) peut être sollicité par le piston (23f).

5. Dispositif d'entraînement selon la revendication 3, **caractérisé en ce que** la paroi intermédiaire (6d) présente au moins un canal (23d, 25d) perméable au fluide sous pression, lequel relie l'un à l'autre un dispositif détecteur et la chambre de pression (23e).

6. Dispositif d'entraînement selon la revendication 1, **caractérisé par** un frein (12), le frein (12) étant en liaison fonctionnelle avec la transmission planétaire (3, 32, 42).

7. Dispositif d'entraînement selon la revendication 6, **caractérisé en ce que** le dispositif d'entraînement (1, 38, 39, 40, 44) présente un dispositif d'actionnement supplémentaire (25) pour le frein (12) pouvant être sollicité avec du fluide sous pression, lequel est pourvu d'un piston supplémentaire (25f) pouvant être sollicité avec le fluide sous pression.

8. Dispositif d'entraînement selon la revendication 7, **caractérisé en ce que** le piston supplémentaire (25f) est disposé de manière déplaçable longitudinalement dans une chambre de pression supplémentaire (25e) pouvant être remplie de fluide sous pression, laquelle est réalisée dans la paroi intermédiaire (6d) du boîtier du dispositif d'entraînement (1, 38, 39, 40, 44), l'arbre d'entraînement (9) connecté à un rotor (7) de la machine électrique (2) étant supporté dans la paroi intermédiaire (6d) de manière à pouvoir tourner par rapport à un stator (8) de la machine électrique (2) autour de l'axe de rotation (10).

9. Dispositif d'entraînement selon la revendication 8, **caractérisé en ce que** la paroi intermédiaire (6d) présente au moins un canal supplémentaire (25d) perméable au fluide sous pression, lequel relie l'un à l'autre un dispositif détecteur supplémentaire et la chambre de pression supplémentaire (25e).

10. Dispositif d'entraînement selon la revendication 1 ou la revendication 7, **caractérisé en ce qu'**au moins une partie de l'au moins une chambre de pression (23e, 25e) est radialement opposée au stator (8) radialement entre le stator (8) et l'arbre d'entraînement (9).
